# EUROPEAN PATENT SPECIFICATION

(11) **EP 1 294 465 B1**
(45) Date of publication and mention of the grant of the patent: **31.08.2016**
(21) Application number: 01945823.1
(22) Date of filing: 22.06.2001
(51) Int. Cl.: B01D 33/04, B01D 33/056, B01D 33/74

(54) **APPARATUS AND METHOD FOR SEPARATING FLUIDS FROM SOLIDS, PROVIDING SUCTION ON THE SIDES AND/OR UNDERNEATH A CARRIER BELT**
VORRICHTUNG UND VERFAHREN ZUR TRENNUNG VON FLUIDEN AUS FESTSTOFFEN MIT ABSAUGUNG AN DEN SEITEN UND/ODER UNTERHALB EINES FÖRDERBANDS
APPAREIL ET PROCEDE DE SEPARATION DE FLUIDES DE SOLIDES DOTE D'UNE EXTRACTION BASSE ET LATERALE PAR LA CEINTURE

(30) Priority: 22.06.2000 NL 1015502
(43) Date of publication of application: 26.03.2003
(73) Proprietor: Pannevis B.V., 3542 AC Utrecht (NL)
(72) Inventor: MARCHAL, Jan, Marinus, NL-3436 GW Nieuwegein (NL)
(74) Representative: EP&C
(86) International application number: PCT/NL2001/000469
(87) International publication number: WO 2001/097948

(56) References cited:
- EP-A1- 0 839 562
- NL-A- 8 303 016
- US-A- 4 351 726

## Description

For many years the applicant has marketed devices for separating liquids and solids. A first embodiment thereof is provided with a suction box co-displacing with a filter cloth and making a reciprocating movement.

In another embodiment side boxes are situated close to a side edge of a carrier belt for the filter cloth, and the liquids are sucked through channels in the carrier belt to the suction boxes. This latter embodiment has the advantage over the above mentioned first embodiment in that the suction boxes can be of a relatively simple structure since they are placed in stationary position. Due to the arrangement close to the edges the suction boxes are readily accessible for inspection, cleaning and maintenance.

In this known second embodiment the sealing of the carrier belt relative to the suction box is a problem. The possible solutions to this problem are costly and/or require frequent maintenance.

Embodiments of prior art devices for separating liquids and solids are disclosed in NL 8 303 016 A and EP 0 839 562 A.

The present invention provides a device for separating liquid and solid material from a mixture, as claimed in claim 1.

In a preferred embodiment the carrier belt is embodied in plastic, this being recommended for particular chemical compounds since it does not give off any colour to the separated liquid and/or solid material.

In another preferred embodiment the carrier belt is made of rubber, since rubber is extremely wear-resistant and has a long lifespan.

In the case of determined carrier belts it is recommended to dispose the suction box on only one side thereof, which is of course advantageous in respect of maintenance, inspection and the like.

Further advantages, features and details of the present invention will be elucidated on the basis of the following description of a preferred embodiment thereof with reference to the annexed drawings, in which:
Fig. 1 shows a view in perspective of a preferred embodiment of the device according to the present invention;
Fig. 2 is a cross-sectional view along the preferred embodiment shown in fig. 1; and
Fig. 3 shows a cross-sectional view of an embodiment of a device not according to the present invention.

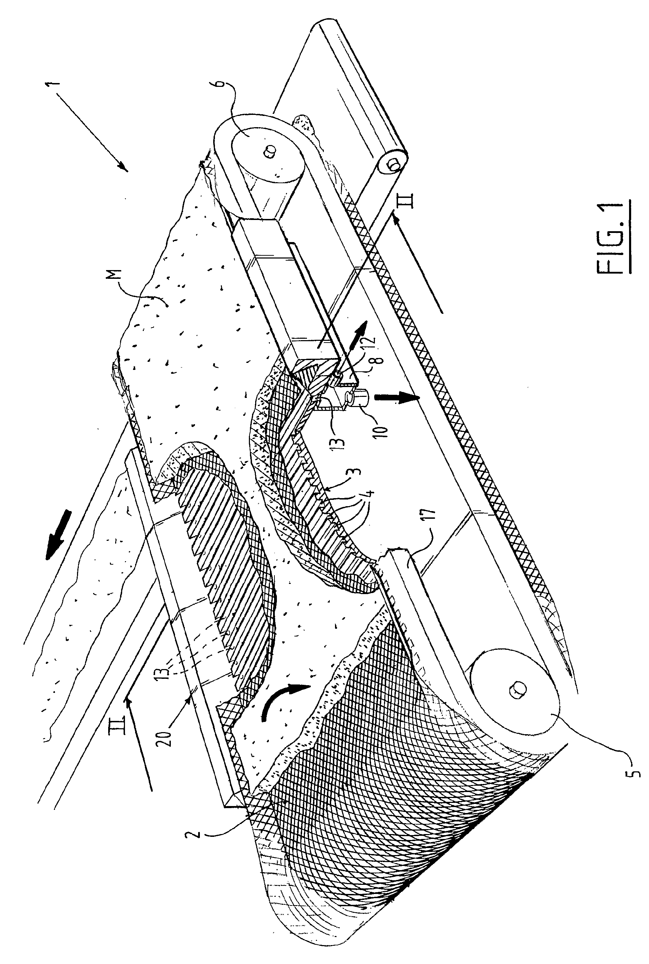

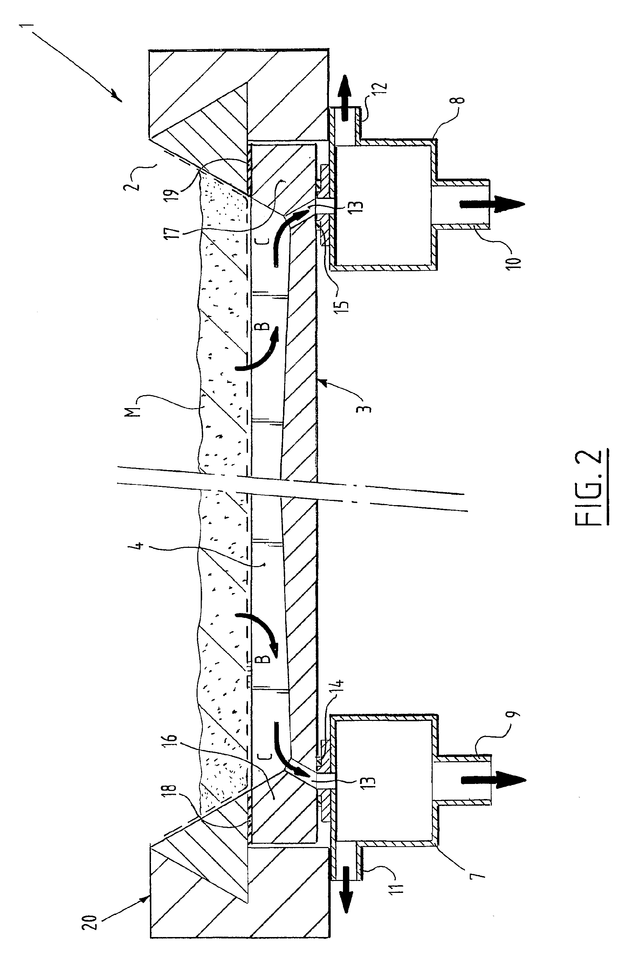

In a device 1 (fig. 1,2) a filter cloth 2 and a rubber belt 3 placed thereunder and provided with channels 4 are trained round, with rollers 5, 6, at least one of which is driven. Disposed along the edges in stationary position under carrier belt 3 are suction boxes 7,8 which are provided on the underside with discharge connections 9 and 10 respectively for discharging the liquid sucked through filter cloth 2, while the suction boxes are provided on the top side with suction connections 11 and 12 respectively whereby a further separation between volatile constituents of the liquid and less volatile constituents thereof also takes place in suction boxes 7, 8.

The liquid is sucked out of mixture M as according to arrows A, B and C into the suction boxes via openings 13 in carrier belt 3, wherein between carrier belt 3 and suction boxes 7 respectively 8 are arranged seals 14 and 15 respectively of wear-resistant material and relatively simple manufacture.

As shown particularly in fig. 2, the carrier belt is provided on both edges with heel parts 16 and 17 respectively in order to ensure that the liquid enters the openings 13 via the arrows. The carrier belt is sealed on the upper side relative to the fixedly disposed construction 20 using seals 18 and 19 respectively.

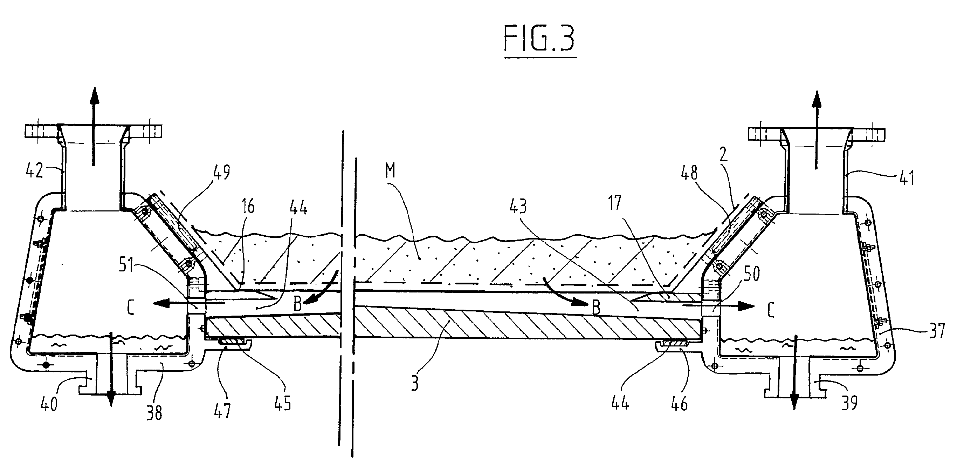

In an embodiment as shown in figure 3 and not according to the invention, the suctions boxes 37,38 are arranged in stationary position on the sides of carrier belt 3, wherein the suction boxes are again provided on the underside with discharge connections 39 and 40 respectively for discharging liquid sucked through filter cloth 2, said boxes being provided on the top side with suction connections 41 and 42 respectively whereby a separation between volatile constituents of the liquid and less volatile constituents thereof also takes place in suction boxes 37,38. The carrier belt lies at both sides on seals 44,45 of a wear-resistant material, such as for instance teflon, which is situated on supports 46, 47 fixed to suction boxes 37,38. In order to discharge the liquid sucked through filter cloth 2, channels 43,44 are made in the outer ends of the carrier belt and/or heel parts 16 respectively 17, which channels connect onto elongate opening parts 50,51 on the side of suction boxes 37,38. Situated on the sloping upper part of the suction boxes are shoulder parts 48 and 49 respectively of a wear-resistant material with a low coefficient of friction, such as for instance teflon, on which the filter cloth 2 supports and along which this cloth is pulled.

In a further embodiment (not shown) of the present invention suction boxes are disposed in stationary position under and on the side of the carrier belt. This embodiment is therefore a combination of the embodiments shown in figures 1,2 and 3.

## Claims

1. Device (1) for separating liquid and solid material from a mixture, comprising :
a filter cloth (2) for allowing through the liquid and holding back the solid material;
a carrier belt (3) for supporting the filter cloth with the mixture thereon, wherein the carrier belt has a ribbed profile, between the ribs of which channels (4) extend to the side edges thereof, wherein the carrier belt is of plastic or rubber and provided with a heel part.(16), wherein the carrier belt is provided with one or more openings (13), wherein the one or more openings are situated in the region between an outer edge and a quarter of the width of the carrier belt;
a support construction for supporting the carrier belt movable relative thereto; and
a suction box (7,8) arranged under the support construction and under the openings on only one side and connected to the one or more openings (13) in the carrier belt for extracting liquid from the mixture, wherein the suction box (7,8) is provided with a connection (11, 12) for discharging volatile constituents from the mixture.

2. Device (1) as claimed in claim 1, wherein the carrier belt (3) has a width of more than 1.5-2 metres, and suction boxes 7, 8 are placed on both sides of the carrier belt.

3. Device (1) as claimed in any of the claims 1 or 2, wherein the carrier belt (3) has a thickness of about 25-30 cm.

4. Device (1) as claimed in any of the claims 1-3, wherein the or each suction box (7, 8) is provided with a closable hatch for inspection and/or maintenance purposes.

5. Method for separating liquids and solid material, wherein a device as claimed in any of the claims 1-4 is applied.

## Patentansprüche

1. Vorrichtung (1) zum Separieren von Flüssigkeit und festem Material von einer Mixtur, umfassend:
ein Filtertuch (2) zum Durchlassen der Flüssigkeit und Zurückhalten des festen Materials;
ein Trägerband (3) zum Stützen des Filtertuchs mit der Mixtur darauf, wobei das Trägerband ein geripptes Profil hat, zwischen dessen Rippen sich Kanäle (4) zu den Seitenkanten davon erstrecken, wobei das Trägerband aus Plastik oder Gummi ist und mit einem Absatzteil (16) versehen ist, wobei das Trägerband mit einer oder mehreren Öffnungen (13) versehen ist, wobei die eine oder mehreren Öffnungen in der Region zwischen einer äußeren Kante und einem Viertel der Breite des Trägerbands angeordnet sind;
eine Stützkonstruktion zum Stützen des relativ dazu beweglichen Trägerbands; und
eine Saugbox (7,8) angeordnet unter der Stützkonstruktion und unter den Öffnungen auf nur einer Seite, und verbunden mit der einen oder den mehreren Öffnungen (13) in dem Trägerband zum Extrahieren von Flüssigkeit von der Mixtur,
wobei die Saugbox (7,8) mit einer Verbindung (11, 12) zum Abführen von volatilen Bestandteilen von der Mixtur versehen ist.

2. Vorrichtung (1) nach Anspruch 1, wobei das Trägerband (3) eine Breite von mehr als 1,5 - 2 Metern hat, und Saugboxen (7,8) auf beiden Seiten des Trägerbands platziert sind.

3. Vorrichtung (1) nach einem der Ansprüche 1 oder 2, wobei das Trägerband (3) eine Dicke von etwa 25 - 30 cm hat.

4. Vorrichtung (1) nach einem der Ansprüche 1 - 3, wobei die oder jede Saugbox (7, 8) mit einer schließbaren Klappe zu Inspektions- und/oder Wartungszwecken versehen ist.

5. Verfahren zum Separieren von Flüssigkeiten und festem Material, wobei eine Vorrichtung nach einem der Ansprüche 1 - 4 verwendet wird.

## Revendications

1. Dispositif (1) de séparation d'un liquide et d'un matériau solide d'un mélange, qui comprend :
un tissu filtrant (2) destiné à laisser passer le liquide et à retenir le matériau solide ;
une courroie transporteuse (3) destinée à supporter le tissu filtrant avec le mélange dessus, la courroie transporteuse ayant un profil nervuré, entre les nervures duquel des canaux (4) s'étendent jusqu'aux bords latéraux de celui-ci, la courroie transporteuse étant en plastique ou en caoutchouc et étant munie d'une partie de talon (16), la courroie transporteuse étant munie d'une ou plusieurs ouverture(s) (13), la ou les ouverture(s) étant située(s) dans la zone qui se trouve entre un bord extérieur et un quart de la largeur de la courroie transporteuse ;
une construction de support destinée à supporter la courroie transporteuse qui se déplace par rapport à celle-ci ; et
un boîtier d'aspiration (7, 8) placé sous la construction de support et sous les ouvertures sur un seul côté, et relié aux ouvertures (13) situées dans la courroie transporteuse afin d'extraire le liquide du mélange,
dans lequel le boîtier d'aspiration (7, 8) est muni d'une liaison (11, 12) destinée à évacuer les constituants volatils du mélange.

2. Dispositif (1) selon la revendication 1, dans lequel la courroie transporteuse (3) possède une largeur supérieure à 1,5 à 2 mètres, et les boîtiers d'aspiration (7, 8) sont placés des deux côtés de la courroie transporteuse.

3. Dispositif (1) selon l'une quelconque des revendications 1 ou 2, dans lequel la courroie transporteuse (3) possède une épaisseur d'environ 25 à 30 cm.

4. Dispositif (1) selon l'une quelconque des revendications 1 à 3, dans lequel le ou chaque boîtier d'aspiration (7, 8) est muni d'une trappe refermable destinée à l'inspection et/ou à la maintenance.

5. Procédé de séparation de liquides et de solides, dans lequel un dispositif selon l'une quelconque des revendications 1 à 4 est appliqué.
